# EUROPEAN PATENT APPLICATION

(11) **EP 1 600 353 A2**
(43) Date of publication of application: **30.11.2005**
(21) Application number: 05011244.0
(22) Date of filing: 24.05.2005
(51) Int. Cl.: B62B 5/00

(54) **Structure of electric and foldable golf cart**

(30) Priority: 27.05.2004 CN 200420046489
(71) Applicant: Liao, Hsueh-Jean, Shenzhen 518109 (CN)
(72) Inventor: Liao, Hsueh-Jean, Shenzhen 518109 (CN)
(74) Representative: Beetz & Partner

(57) **Abstract**

A structure of an electric and foldable golf cart includes a handlebar (250), folding mechanisms (300, 500), an upper bearing stem, an upper bracket, a fixed base, a lower bearing stem (430), a lower bracket (210), a front-wheel set (100), rear wheels (810), and a motor (910). The handlebar (250) is foldably connected to one end of the upper bearing stem (430). Another end of the upper bearing stem (430) is foldably connected to one end of the fixed base (420). The upper bracket (220) is mounted on the upper bearing stem (430). Another end of the fixed base is foldably connected to one end of the lower bearing stems (410). A support extends from the fixed base (420) for securing the motor (910) and pivoting the rear wheels (810). Another end of the lower bearing stem (410) is foldably connected to the front-wheel set (100). A lower bracket (210) is mounted on the lower bearing stem (410). The dimension of the cart body is greatly reduced and easy to carry by using multi-folding mechanism (300, 500, 700). In addition, the human physical strength is saved by using motor drive when sports equipment such as golf balls and golf clubs are transported.

## Description

### BACKGROUND OF THE INVENTION

### 1. Field of the Invention

The present invention relates to a structure of an electric cart for sports equipment, and especially to a structure of an electric and foldable golf cart.

### 2. Description of Related Art

A conventional golf cart includes a main support, a lower support base connected to a lower end of the main support, two wheel supports pivoted to the main support, a handle rod connected to an upper end of the main support at a lower end, an upper support connected to an upper portion of the main support, a golf bag supported in a position by the supports, and the lower support base, and wheels connected to lower ends of the wheel supports. Thus, one can pull the golf cart easily, holding a handle part of the handle rod.

However, the golf cart can't be folded into smaller size, and in turns, it will occupy much space, causing the cost of packaging, storage, and transportation to increase. Furthermore, the golf cart has no electric power device, not convenient to use or carry.

Therefore, an improved structure of golf cart is desired which overcomes the disadvantages of the prior art.

### SUMMARY OF THE INVENTION

A main object of the present invention is to provide an electric and foldable golf cart, which can be folded into smaller size, and has electric power device.

To obtain the above object, a structure of an electric and foldable golf cart is mainly composed of a handlebar, an adjusting handlebar, a signboard holder, a bearer, folding mechanisms, an upper bearing stem, an upper bracket, a fixed base, a lower bearing stem, a lower bracket, a front-wheel set, a rotating base of rear wheels and a motor. The signboard holder is secured to the bearer. The bearer is connected to the upper bearing stem through a folding mechanism. The upper and lower ends of the upper bearing stem are respectively foldably connected to the bearer and the fixed base with two folding mechanisms. An upper bracket is mounted on the upper bearing stem. The upper and lower ends of the fixed base are respectively foldably connected to the upper and lower bearing stems with two folding mechanisms. A support extends from the fixed base for securing the rotating base of the rear wheels and the motor. The upper and lower ends of the lower bearing stem are respectively foldably connected to the fixed base and a support of the front-wheel set. A lower bracket is mounted on the lower bearing stem.

The folding mechanism comprises an upper cover, lower cover, adjusting gear, screw stem, spring and button. There are toothed bars in both upper and lower covers. The toothed bars match with toothed bars of the adjusting gear. The screw stem goes through the lower cover, spring, adjusting gear and upper cover, and then it is secured with a screw. The button is fastened in the upper cover. With the spring in a normal state, the adjusting gear is engaged with toothed bars in both upper and lower covers. Applying force on the button can push the adjusting gear into the lower cover. Consequently, the toothed bars in the lower cover are disengaged from the toothed bars in the upper cover. Thus, the foldable action can be implemented. With the button released, the elastic function of the spring can make the adjusting gear restore the state of being engaged with the toothed bars in both upper and lower covers. Thus, the unfoldable action can be implemented.

The folding mechanism is comprises a left adjusting cover, right adjusting cover, spring, button and quick disassembly piece. There are concave-convex teeth on the left and right adjusting covers. The concave-convex teeth on the two covers match with each other. The quick disassembly piece goes through the right adjusting cover, spring and left adjusting cover, and then it is secured with a screw. The button can make the left and right adjusting covers clasped and fixed in place. The front end of the button is a shaft that is inserted into the small spring. The front end of the button has a column-like shape. The middle has a half column-like shape that fits in with the surface of the right adjusting cover. The rear end has a disc-like shape, convenient to press with a hand.

The folding mechanism is composed of a link block, holder and a pair of screws. The link block has a step-like shape and the lower end of the holder has a matching step-like shape to it. A through hole at the upper end of the holder is secured to the link block with the pair of screws.

Other objects, advantages and novel features of the invention will become more apparent from the following detailed description of a preferred embodiment thereof when taken in conjunction with the accompanying drawings, wherein:

### BRIEF DESCRIPTION OF THE DRAWINGS

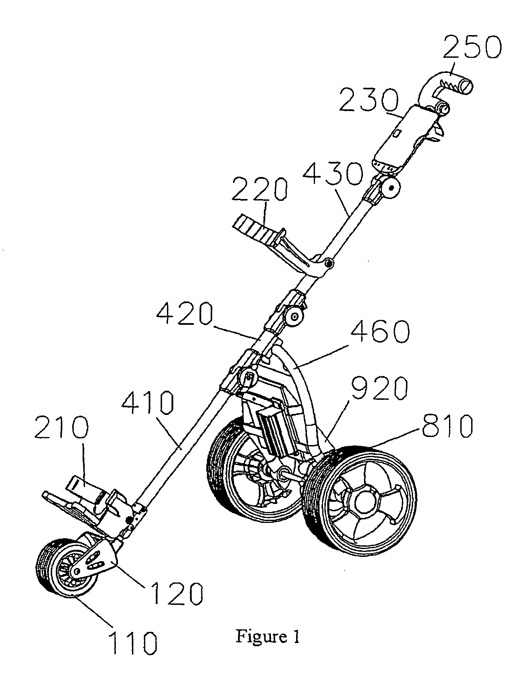

FIG. 1 is an assembled, perspective view of an electric and foldable golf cart in accordance with an embodiment of the present invention;

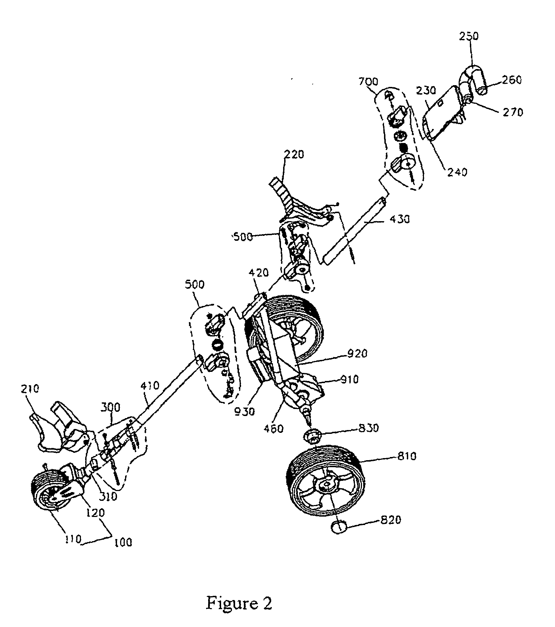

FIG. 2 is an exploded, perspective view of the electric and foldable golf cart of FIG. 1;

FIG. 3 is an exploded, perspective view of a folding mechanism of FIG.1;

FIG. 4 is an exploded, perspective view of another folding mechanism of FIG. 1;

FIG. 5 is an exploded, perspective view of a third folding mechanism of FIG.1; and

FIG. 6 is a perspective view of the electric and foldable golf cart of FIG.1 in a folded state.

### DETAILED DESCRIPTION OF THE INVENTION

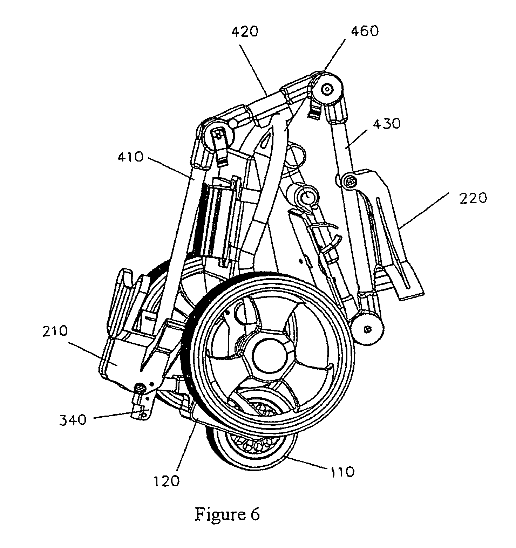

Referring now to FIFS 1, 2, and 6 together, an electric and foldable golf cart in accordance with an embodiment of the present invention, comprises a handlebar 250, an adjusting handlebar 270, a signboard holder 230, a bearer 240, folding mechanisms 700, 500 and 300, an upper bearing stem 430, an upper bracket 220, a fixed base 420, a lower bearing stem 410, a lower bracket 210, a front-wheel set 100, a rotating base 920 for rear wheels 810, and a motor 910. A golf bag can be supported in a position by the upper and bracket 220, 210. When it is not used, the golf cart can be folded into small size as shown in FIG. 6.

The handlebar 250 connects with the signboard holder 230 at a rear end of the golf cart of the present invention. A handlebar grip 260 is set on the handlebar 250. The adjusting handlebar 270 can adjust and change the angle of the handlebar 250. The signboard holder 230 is secured to the bearer 240. The bearer 240 is connected to the upper bearing stem 430 through the folding mechanism 700. The upper and lower ends of the upper bearing stem 430 are respectively connected to the bearer 240 and the fixed base 420 in a foldable way with the folding mechanisms 700 and 500. The upper bracket 220 is mounted on the upper bearing stem 430.

The upper and lower ends of the fixed base 420 are respectively connected to the upper bearing stem 430 and the lower bearing stem 410 in a foldable way with two folding mechanisms 500. A support 460 extends downwardly from the fixed base 420. A supporting piece (not labeled) is formed on the support 460 for securing a battery 930. A wheel shaft (not labeled) is mounted at a lower end of the support 460. Two ends of the wheel shaft respectively go through an adjusting member 830, a position holding ring 820, and then screws so as to pivot the left and right rear wheels 810. The motor 910 is mounted on the wheel shaft and between the left and right rear wheels 810.

The upper and lower ends of the lower bearing stem 410 are respectively connected to the fixed base 420 and a holder 310 of the front-wheel set 100 in a foldable way with folding mechanisms 500 and 300. Lower bracket 210 is mounted on the lower bearing stem 410.

The front-wheel set 100 further comprises a front fork 120 and a front wheel 110. The front fork 120 extends onwards from the holder 310 for mounting the front wheel 110.

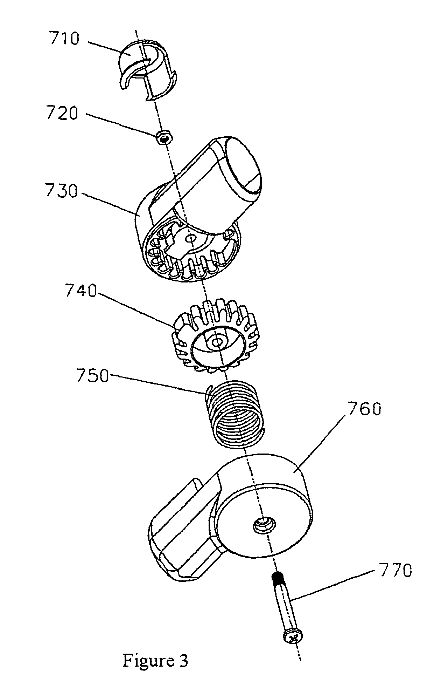

As shown in FIG. 3, the folding mechanism 700 comprises an upper cover 730, a lower cover 760, an adjusting gear 740, a screw stem 770, a spring 750 and a button 710. There are toothed bars in both upper cover 730 and lower cover 760. The toothed bars match with the toothed bars of the adjusting gear 740. The screw stem 770 goes through the lower cover 760, spring 750, adjusting gear 740 and upper cover 730 in sequence, and then it is secured with a screw 720. The button 710 is fastened in the upper cover 730. With the spring 750 in a normal state, the adjusting gear 740 is engaged with the toothed bars in both upper cover 730 and lower cover 760. When a force is applied on the button 710, the adjusting gear 740 is pushed into the lower cover 760. Therefore, the toothed bars of the adjusting gear 740 are disengaged from the toothed bars in the upper cover 730. Thus, the foldable action can be implemented. When the button 710 is released, the elastic function of the spring 750 can make the adjusting gear 740 restore the state of being engaged with the toothed bars in both upper cover 730 and lower cover 760. Thus, the unfoldable action can be implemented.

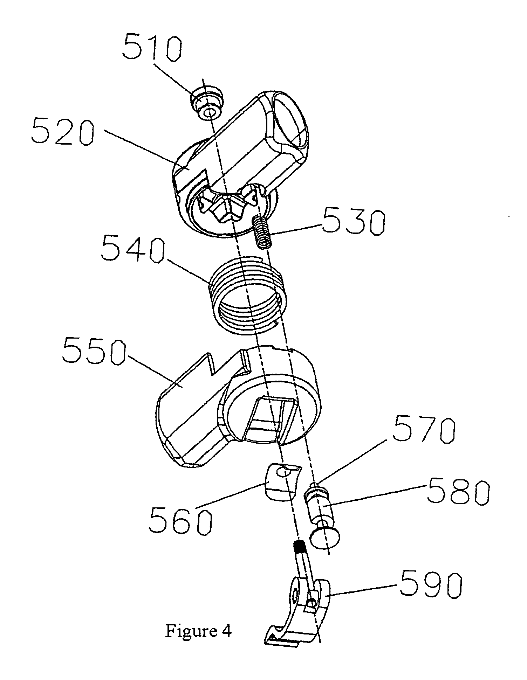

As shown in FIG. 4, the folding mechanism 500 is composed of a left adjusting cover 520, a right adjusting cover 550, a spring 540, a button 580 and a quick disassembly piece 590. There are concave-convex teeth on the left adjusting cover 520 and right adjusting cover 550. The concave-convex teeth on the two covers match with each other. The quick disassembly piece 590 goes through the right adjusting cover 550, spring 540 and the left adjusting cover 520, and then it is secured with a screw 510. A shim 560 is filled between the quick disassembly piece 590 and the right adjusting cover 550. The button 580 can make the left adjusting cover 520 and right adjusting cover 550 clasped and fixed in place. A front end of the button 580 has a shaft 570 and a part in a column-like shape, wherein the shaft 570 can be inserted into a small spring 530. The middle of the button 580 has a part in a half column-like shape that just fits in with the surface of the right adjusting cover 550. The rear end of the button 580 has a disc-like shape, such that it is convenient to press with a hand. When the quick disassembly piece 590 is secured, the left adjusting cover 520 and right adjusting cover 550 are fixed in place due to the mutual engagement of their teeth. The spring 540 in the covers is also contracted due to the applied force. The small spring 530 pushes and holds the button 580. Thus, the column-like head of the button 580 is securely fastened in grooves (not labeled) of both left adjusting cover 520 and right adjusting cover 550. When the quick disassembly piece 590 is released, the left adjusting cover 520 and right adjusting cover 550 are disengaged from each other due to the restoring function of the large spring 540. In this case, pressing and holding button 580 makes the column-like head thereof disengaged from the groove of the right adjusting cover 550 and completely get into the left adjusting cover 520. Thus, the left adjusting cover 520 and right adjusting cover 550 can be oppositely turned to implement the foldable action. Besides, when the column-like head of the button 580 meets another groove of the right adjusting cover 550 during its turning, the column-like head will automatically bound into the groove due to the restoring function of the small spring 530. Thus, the left adjusting cover 520 and right adjusting cover 550 are fixed in place again.

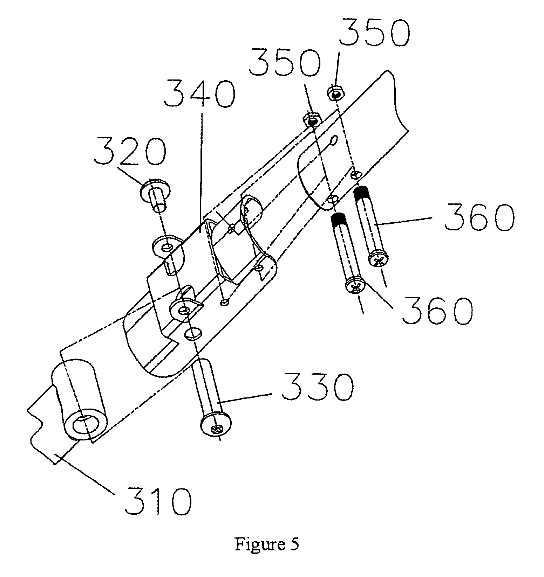

As shown in FIG. 5, the folding mechanism 300 is composed of a link block 340, a holder 310 and a pair of screws 320 and 330. The link block 340 has a step-like shape and the lower end of the holder 310 has a matching step-like shape to it. A through hole (not labeled) of the holder 310 is secured to the link block 340 with the pair of screws 320 and 330. The link block 340 is secured to the lower bearing stem 410 with the two pairs of screws 350 and 360.

In conclusion, the dimension of the cart body is greatly reduced and easy to carry by using multi-folding mechanisms in the present invention. In addition, the human physical strength is saved using the motor 910 to drive when sporting equipment such as golf balls and golf clubs are transported.

## Claims

1. A structure of an electric and foldable golf cart comprising:
a handlebar (250);
folding mechanisms (300, 500, 700);
an upper bearing stem (430);
an upper bracket (220);
a fixed base (420);
a lower bearing stem (410);
a lower bracket (210);
a front-wheel set (100);
rear wheels (810); and
a motor (910);
wherein the handlebar (250) is foldably connected to one end of the upper bearing stem (430) using one folding mechanism (700), another end of the upper bearing stem (430) is foldably connected to one end of the fixed base (420) using one folding mechanism (500), the upper bracket (220) is mounted on the upper bearing stem (430), another end of the fixed base (420) is foldably connected to one end of the lower bearing stem (410) using one folding mechanism (500), a support extends from the fixed base (420) for securing the motor (910) and pivoting the rear wheels (810), another end of the lower bearing stem (410) is foldably connected to the front-wheel set using one folding mechanism (300), and a lower bracket (210) is mounted on the lower bearing stem (410).

2. Structure according to claim 1, **characterized in that** a supporting piece is formed on the support for securing a battery (930).

3. Structure according to claim 1 or 2, **characterized by** further comprising an adjusting handlebar (250) for adjusting and changing the angle of the handlebar (250).

4. Structure according to any of the preceding claims, **characterized by** further comprising a signboard holder (230) and a bearer (240) for securing the signboard holder (230), and the bearer (240) being set between the handlebar (250) and the folding mechanism (700).

5. Structure according to any of the preceding claims, **characterized in that** the front-wheel set (100) comprises a support (310), a front wheel (110), and a front fork (120), the support (310) of the front-wheel set (100) is foldably connected to one end of the lower bearing stem (410), the front fork (120) extends from the support (310) and secures the front wheel (110).

6. Structure according to any of the preceding claims, **characterized in that** the folding mechanism (700) comprises an upper cover (730), a lower cover (760), an adjusting gear (740), a screw stem (770), a spring (750) and a button (710), there are toothed bars in both upper and lower covers, the toothed bars match with toothed bars of the adjusting gear (740), the screw stem (770) goes through the lower cover (760), spring (750), adjusting gear (740) and upper cover (730), and is secured with a screw (720), and the button (710) is fastened in the upper cover (730).

7. Structure according to any of the preceding claims, **characterized in that** the folding mechanism (500) comprises a left adjusting cover (520), a right adjusting cover (550), a spring (540), a button (580) and a quick disassembly piece (590), there are concave-convex teeth on the left and right adjusting covers, the concave-convex teeth on the two covers match with each other, the quick disassembly piece (590) goes through the right adjusting cover (550), spring (540) and left adjusting cover (520), and is secured with a screw (510), the button (580) can make the left and right adjusting covers clasped and fixed in place.

8. Structure according to claim 7, **characterized in that** a front end of the button (580) has a shaft and a part in a column-like shape, the shaft can be inserted into a small spring (530), the middle of the button has a part in a half column-like shape that just fits in with a surface of the right adjusting cover (550), the rear end of the button has a disc-like shape, and the column-like part of the button can be securely fastened in grooves of both left adjusting cover and right adjusting cover.

9. Structure according to any of the preceding claims, **characterized in that** the folding mechanism (300) comprises a link block (340), a holder (310) and a pair of screws (320, 330), the link block (340) has a step-like shape and a lower end of the holder (310) has a matching step-like shape to it, and the holder is secured to the link block (340) with the pair of screws (320, 330).

10. Structure according to any of the preceding claims, **characterized in that** the link block (340) is secured to the lower bearing stem (410) with screws (350, 360).
